# EUROPÄISCHE PATENTSCHRIFT

(11) **EP 3 183 301 B1**
(45) Veröffentlichungstag und Bekanntmachung des Hinweises auf die Patenterteilung: **16.09.2020**
(21) Anmeldenummer: 15745151.9
(22) Anmeldetag: 24.07.2015
(51) Int. Cl.: C09C 1/36, C09C 3/06

(54) **VERFAHREN ZUR OBERFLÄCHENBESCHICHTUNG VON ANORGANISCHEN PARTIKELN MIT SILICIUMDIOXID UND MINDESTENS EINER WEITEREN ANORGANISCHEN VERBINDUNG**
METHOD FOR COATING THE SURFACE OF INORGANIC PARTICLES WITH SILICON DIOXIDE AND AT LEAST ONE OTHER INORGANIC COMPOUND
PROCÉDÉ DE REVÊTEMENT DE SURFACE DE PARTICULES ANORGANIQUES À L'AIDE D'OXYDE DE SILICIUM ET AU MOINS D'UNE AUTRE LIAISON ANORGANIQUE

(30) Priorität: 18.08.2014 EP 14002863
(43) Veröffentlichungstag der Anmeldung: 28.06.2017
(73) Patentinhaber: Kronos International, Inc., 51373 Leverkusen (DE)
(72) Erfinder: BEYER, Norbert, 50226 Frechen (DE); FIDALGO-ESTEVEZ, Jud-Reginauld, 52080 Aachen (DE); FRAHM, Heiko, 51375 Leverkusen (DE); BLUEMEL, Siegfried, 40883 Ratingen-Eggerscheid (DE)
(86) Internationale Anmeldenummer: PCT/EP2015/001537
(87) Internationale Veröffentlichungsnummer: WO 2016/026548

(56) Entgegenhaltungen:
- EP-A1- 2 540 672
- WO-A1-2006/012950
- GB-A- 969 352
- JP-A- 2008 081 578
- US-A- 3 650 793
- DATABASE WPI Week 200381 Thomson Scientific, London, GB; AN 2003-868775 XP002735079, & JP 2003 212722 A (POLA CHEM IND INC) 30. Juli 2003 (2003-07-30)

## Beschreibung

### Gebiet der Erfindung

Die Erfindung betrifft ein Verfahren zur Oberflächenbeschichtung von anorganischen Partikeln, insbesondere von Titandioxidpigment-Partikeln mit einer dichten Siliciumdioxid-Hülle und mindestens einer weiteren anorganischen Verbindung, insbesondere mit Aluminiumoxid.

### Technologischer Hintergrund der Erfindung

Anorganische Partikel, insbesondere anorganische Pigmentpartikel werden vielfach oberflächenbehandelt, um bestimmte Eigenschaften zu verändern, beispielsweise Oberflächenladung, Dispergiereigenschaften, Säure- oder Lichtbeständigkeit. Insbesondere Titandioxid ist wegen seines hohen Lichtbrechungsindexes ein hochwertiges und in vielen Bereichen eingesetztes Pigment wie z.B. in Beschichtungen, Kunststoffen oder Fasern und Papier. Allerdings ist Titandioxid photoaktiv, d.h. durch die Einwirkung von ultravioletten Strahlen entstehen über Elektron-Loch-Paare freie Radikale an der Oberfläche, die mit den in der umgebenden Matrix vorhandenen Stoffen Reaktionen eingehen können, was zur Zerstörung dieser Matrix führen kann.

Ein üblicher Weg, um die Photoaktivität der Titandioxidpartikel zu verringern d.h. die photochemische Stabilität zu erhöhen, ist die Umhüllung der Partikel mit einer möglichst dichten amorphen Siliciumdioxid-Schicht, einer sogenannten "dense skin", die verhindern soll, dass sich freie Radikale an der Oberfläche bilden. Allerdings ist ebenfalls bekannt, dass die dichte SiO₂-Hülle Aufhellvermögen (TS), Glanz und Dispergierbarkeit der Pigmentpartikel beeinträchtigt. Üblicherweise werden die Pigmentpartikel deswegen nach Aufbringen der dichten SiO₂-Hülle mit Aluminiumoxid behandelt. Die Dokumente WO 2006/012950 A1 und GB 969 352 A beschreiben wetterstabile Titandioxidpigmente, die zunächst mit einer SiO₂- und anschließend einer Al₂O₃-Hülle *in situ* versehen werden, bevor diese getrocknet werden

Um die Kreidungsstabilität zu erhöhen, schlägt das Dokument US 3,650,793 mit einer Ausführungsform vor, zunächst das Titandioxidpigment mit ZnO zu beschichten und das so erhaltene Pigment anschließend mit Wärme zu behandeln, um dann *in situ* eine SiO₂- und eine Al₂O₃-Schicht aufzubringen.

Das Dokument JP 20020005513 beschreibt eine Titandioxid-Glimmer-Pigment für kosmetische Anwendungen, das in einem ersten Schritt mit AlCl₃ und Urea behandelt wird und in einem darauffolgendem Schritt mit Al₂O₃ beschichtet wird.

Weiterhin sind aus dem Stand der Technik verschiedene Verfahren bekannt, um die Oberflächenbehandlung mit dichter Siliciumdioxid-Hülle und Aluminiumoxid weiter zu optimieren. Beispielsweise offenbart DE 1 467 492 ein Verfahren zur Verbesserung von sowohl Aufhellvermögen wie Glanz als auch photochemischer Stabilität von Titanoxid, bei dem die Pigmentpartikel zweifach mit SiO₂ und Al₂O₃ oberflächenbeschichtet werden und abschließend einer Wärmebehandlung bei 700°C unterzogen werden.

Es wird allgemein angenommen, dass die Verbesserung von Aufhellvermögen, Glanz und Dispergierbarkeit von mit dichter SiO₂-Hülle und anschließende Al₂O₃-Behandlung versehenen Pigmenten durch veränderte Oberflächeneigenschaften - Zetapotential bzw. isoelektrischer Punkt (IEP) - verursacht wird. Bekanntermaßen liegt der isoelektrische Punkt bei Aluminiumoxidoberflächen bei einem pH-Wert von etwa 9 im Gegensatz zu Siliciumdioxidoberflächen, deren isoelektrischer Punkt bei einem pH-Wert von etwa 2 liegt. Oberflächenanalytische Untersuchungen zeigen jedoch, dass die bekannten Verfahren zur sequentiellen Fällung einer inneren dichten SiO₂-Schicht und einer äußeren Al₂O₃-Schicht keine klar getrennten separaten Schichten erzeugen. Vielmehr wird Al₂O₃ in die SiO₂-Schicht eingebaut, so dass sich eine Mischschicht aus SiO₂ und Al₂O₃ bildet. Dieser Befund wird unterstützt durch Messergebnisse des Zetapotentials bzw. des isoelektrischen Punkts der Partikel. Der isoelektrische Punkt von Pigmentoberflächen, die mit einer dichten SiO₂-Hülle versehen und anschließend mit Al₂O₃ behandelt wurden, liegt üblicherweise bei einem pH-Wert von deutlich unter 9.

Es besteht somit Bedarf für ein Verfahren, mit Hilfe dessen separate Schichten von anorganischen Verbindungen auf die Oberfläche anorganischer Partikel, die eine dichte SiO₂-Hülle aufweisen, aufgebracht werden können.

### Figuren

Figur 1: EDX-Linienscan für eine Probe gemäß Vergleichsbeispiel.
Figur 2: EDX-Linienscan für eine Probe gemäß Beispiel 4.

### Aufgabenstellung und Kurzbeschreibung der Erfindung

Der Erfindung liegt die Aufgabe zugrunde, ein Verfahren anzugeben, mit Hilfe dessen die Oberfläche von anorganischen Partikeln mit einer separaten, dichten Siliciumdioxidschicht und mit mindestens einer weiteren separaten Schicht einer anorganischen Verbindung versehen werden kann. Insbesondere liegt die Aufgabe darin, eine möglichst reine, geschlossene Al₂O₃-Schicht als abschließende Schicht auf die Oberfläche von Titandioxidpigment-Partikeln, die zuvor mit einer separaten, dichten SiO₂-Hülle versehen worden waren, aufzubringen.

Die Aufgabe wird gelöst durch ein Verfahren zur Oberflächenbeschichtung von anorganischen Partikeln in einer wässrigen Suspension mit einer separaten, dichten Siliciumdioxidschicht und mindestens einer weiteren anorganischen Verbindung dadurch gekennzeichnet, dass die Partikel nach Aufbringen der Siliciumdioxidschicht aus der Suspension abgetrennt, gewaschen, getrocknet und wärmebehandelt werden und anschließend erneut zu einer wässrigen Suspension angeteigt und mit mindestens einer weiteren anorganischen Verbindung beschichtet werden, wobei das Trocknen bei einer Temperatur von mehr als 100 °C erfolgt und die Wärmebehandlung bei einer Temperatur von 200 °C bis 850 °C erfolgt.

Weitere vorteilhafte Ausführungsformen der Erfindung sind in den Unteransprüchen angegeben.

### Beschreibung der Erfindung

Alle im Folgenden offenbarten Angaben bezüglich Größe in µm usw., Konzentration in Gew.- % oder Vol.-%, pH-Wert usw. sind so zu verstehen, dass alle Werte, die im Bereich der dem Fachmann bekannten jeweiligen Messgenauigkeit liegen, mit umfasst sind.
Im Rahmen der Erfindung werden unter Siliciumdioxid, Aluminiumoxid oder anderen Metalloxiden auch die jeweiligen wasserhaltigen Formen wie z.B. Hydroxide, Oxidhydrate etc. verstanden.

Das erfindungsgemäße Verfahren geht aus von einer wässrigen Suspension anorganischer Partikel. Bei den Partikeln handelt es sich beispielsweise um Titandioxid, Zirkonoxid, Eisenoxid und andere. Bevorzugt sind erfindungsgemäß Pigmentpartikel, insbesondere Titandioxidpigmentpartikel.
Die Titandioxidpigmentpartikel sind nach üblichen Verfahren hergestellt, beispielsweise dem Sulfatverfahren oder dem Chloridverfahren. Die mittlere Partikelgröße liegt üblicherweise im Bereich von 0,2 bis 0,5 µm.
Die unbehandelten Partikel werden zu einer wässrigen Suspension angeteigt und bevorzugt in einer Rührwerksmühle deagglomeriert, gegebenenfalls unter Zusatz eines üblichen Dispergiermittels.
Um eine dichte Siliciumdioxidhülle aufzubringen, wird die Suspension üblicherweise auf einen pH-Wert im Bereich von 10 bis 12 eingestellt, und anschließend wird eine alkalische Silikatlösung zugegeben. Anschließend wird der pH-Wert auf unter 9 abgesenkt und Siliciumdioxid gefällt. Entsprechende Verfahrensweisen sind beispielsweise in EP 1 771 519 B1 offenbart. Dem Fachmann sind diese Verfahren bekannt.

In einer besonderen Ausführung der Erfindung enthält die separate, dichte SiO₂-Hülle weitere Metallionen wie beispielsweise in EP 1 771 519 B1 oder WO 2007/085493 A2 beschrieben.

Nach Auffällung der separaten, dichten SiO₂-Hülle auf die Partikeloberfläche werden die Partikel erfindungsgemäß aus der Suspension abgetrennt und gewaschen.
Die aufgefällte Hülle enthält bevorzugt 1,5 bis 6 Gew.-% SiO₂ bezogen auf Gesamtpartikel, insbesondere 2 bis 4 Gew.-%.

Die Partikel werden zunächst bei Temperaturen von mehr als 100 °C getrocknet. Nachfolgend werden die Partikel einer Wärmebehandlung bei einer Temperatur zwischen 200 °C und 850 °C unterzogen. Als Aggregate eigenen sich beispielsweise übliche Apparate wie Sprühtrockner, Trockenschrank, Etagentrockner, Vibrations-Wirbelschichttrockner, Muffelofen oder Drehrohrofen. Die Dauer der Wärmebehandlung variiert in Abhängigkeit von der gewählten Temperatur und dem Apparat zwischen wenigen Minuten und mehreren Stunden.
Bevorzugt werden die Pigmentpartikel zunächst in einem Sprühtrockner getrocknet und anschließend in einem Etagentrockner oder Muffelofen wärmebehandelt.

Nachfolgend werden die Partikel erneut zu einer wässrigen Suspension angeteigt, deagglomeriert und mindestens eine Schicht einer anorganischen Verbindung durch Zugabe einer entsprechenden Salzlösung und Fällung der entsprechenden Verbindung auf die Partikeloberfläche nach bekannten Verfahren aufgebracht.
Bevorzugt enthalten die ausgewählten anorganischen Verbindungen Aluminium, Elemente der 2. Hauptgruppe oder der Nebengruppen oder Kombinationen davon. Geeignet sind beispielsweise die Elemente aus der Gruppe der Lanthaniden.
Insbesondere ist die weitere anorganische Verbindung ausgewählt aus der Gruppe der Oxide, Hydroxide, Carbonate, Phosphate und Sulfide oder Kombinationen davon.
In einer besonderen Ausführung der Erfindung handelt es sich um Aluminiumoxid.
Zur Fällung von Aluminiumoxid wird als Metallsalzlösung bevorzugt Natriumaluminat verwendet. Geeignet sind auch Aluminiumsulfat, Aluminiumchlorid, etc. Bevorzugt wird 1 bis 10 Gew.-%, insbesondere 2 bis 4 Gew.-% Aluminiumsalzlösung gerechnet als Al₂O₃ und bezogen auf Gesamtpartikel, eingesetzt.

Abschließend werden die Partikel in bekannter Weise aus der Suspension abgetrennt, gewaschen, getrocknet und gegebenenfalls mikronisiert.

### Beispiele

Die Erfindung wird anhand der folgenden Beispiele genauer beschrieben, ohne dass dadurch der Umfang der Erfindung eingeschränkt werden soll.

### Vergleichsbeispiel 1

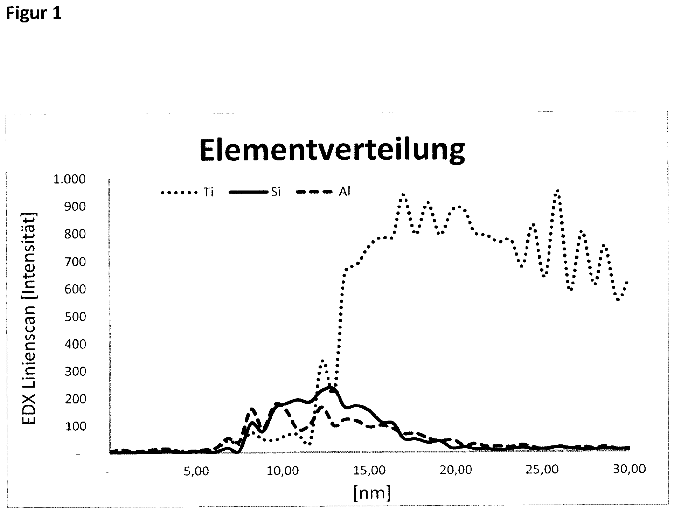

Eine wässrige Suspension von Titandioxid-Grundkörper (hergestellt nach dem Chloridverfahren) mit einer Konzentration von 450 g/L wurde in einer Sandmühle deagglomeriert und anschließend auf einen pH-Wert von 10 und eine Konzentration von 350 g/L TiO₂ eingestellt. Anschließend wurde eine Natrium-Wasserglaslösung mit einer Konzentration von 100 g/L SiO₂ in einer Menge von 2,8 Gew.-% gerechnet als SiO₂ und bezogen auf TiO₂-Grundkörper innerhalb von 20 Minuten unter Rühren zugegeben. Nachfolgend wurde eine Lösung von Titanoxychlorid mit einer Konzentration von 140 g/L TiO₂ in einer Menge von 0,2 Gew.-% gerechnet als TiO₂ und bezogen auf TiO₂-Grundkörper innerhalb von 60 Minuten unter Rühren hinzugegeben. Anschließend wurde HCl (Konzentration 345 g/L) innerhalb von 60 Minuten unter Rühren in einer Menge zugegeben, dass ein pH-Wert von 4 erreicht wurde, währenddessen sich eine SiO₂-Schicht auf der Partikeloberfläche bildete.
Anschließend wurden Natriumaluminatlösung mit einer Konzentration von 260 g/L Al₂O₃ in einer Menge von 2,3 Gew.-% gerechnet als Al₂O₃ und bezogen auf TiO₂ sowie gleichzeitig HCl zugegeben, wobei der pH-Wert konstant bei etwa 4 blieb. Anschließend wurde Natriumaluminatlösung mit einer Konzentration von 260 g/L Al₂O₃ in einer Menge von 0,2 Gew.-% gerechnet als Al₂O₃ und bezogen auf TiO₂ zugegeben, so dass sich ein pH-Wert von etwa 5,7 einstellte.
Nachfolgend wurde der Feststoff durch Filtration abgetrennt, 3 Stunden mit kaltem VE-Wasser gewaschen und 16 Stunden bei 160°C getrocknet. Abschließend wurden die Partikel unter Zugabe von Trimethylolpropan (TMP) in einer Dampfstrahlmühle mikronisiert.
Die Partikel wurden unter dem Rasterelektronenmikroskop (REM) untersucht und ein 30 nm langer EDX-Linienscan senkrecht zur Partikeloberfläche durch Partikelkern und Partikelbeschichtung aufgenommen (Figur 1).

### Vergleichsbeispiel 2

Wie das Vergleichsbeispiel 1 mit dem Unterschied, dass zwischen der SiO₂-Beschichtung und der Al₂O₃-Beschichtung folgende Verfahrensschritte eingeschoben wurden:
Der Feststoff wurde durch Filtration abgetrennt und 3 Stunden mit kaltem VE-Wasser gewaschen. Die erzeugte Filterpaste wurde bei einer Temperatur von 160°C sprühgetrocknet.
Die sprühgetrocknete Filterpaste wurde anschließend erneut zu einer wässrigen Suspension mit 450 g/L Feststoff angeteigt und in einer Rührwerksmühle (PM5 mit Ottawasand 20/30) mit einem Durchsatz von 10 kg/h und ohne pH-Werteinstellung und ohne Dispergiermittelzugabe deagglomeriert.
Nachfolgend wurde die TiO₂-Suspension erneut auf 350 g/L TiO₂ verdünnt und auf einen pH-Wert von 4 eingestellt. Anschließend wurde mit der Zugabe der Natriumaluminatlösung fortgefahren.

### Beispiel 1

Wie Vergleichsbeispiel 2 mit dem Unterschied, dass nach der Sprühtrocknung zusätzlich eine zweistündige Wärmebehandlung bei 400°C erfolgte.

### Beispiel 2

Wie Vergleichsbeispiel 2 mit dem Unterschied, dass nach der Sprühtrocknung zusätzlich eine einstündige Wärmebehandlung bei 800°C erfolgte.

### Beispiel 3

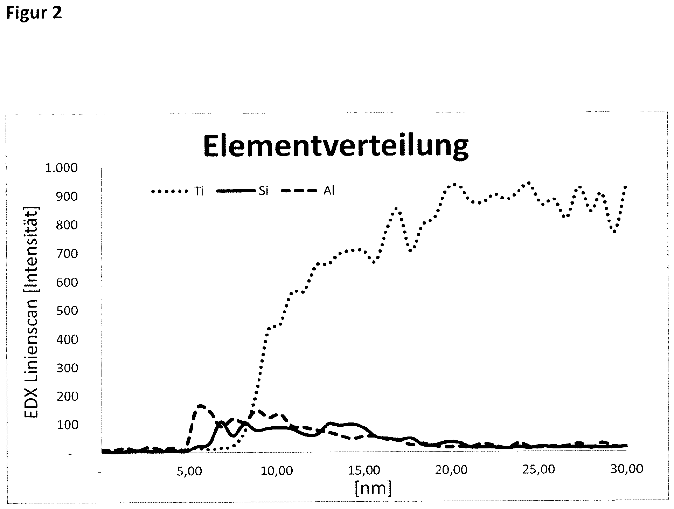

Wie Vergleichsbeispiel 2 mit dem Unterschied, dass nach der Sprühtrocknung zusätzlich eine vierstündige Wärmebehandlung bei 800°C erfolgte.
Beispielprobe 4 wurde unter dem Rasterelektronenmikroskop (REM) untersucht und ein 30 nm langer EDX-Linienscan senkrecht zur Oberfläche durch Partikelkern und Partikelbeschichtung aufgenommen (Figur 2).

### Testung

Die hergestellten Pigmentproben wurden bezüglich Aufhellvermögen (TS), mittlere Partikelgröße (d₅₀), Säurelöslichkeit und isoelektrischem Punkt (IEP) getestet. Die entsprechenden Werte sind in der Tabelle angegeben.

**Tabelle:**

| **Probe** | **Behandlung** | **TS** | **d₅₀** | **Säurelöslichkeit** | **IEP** |
|---|---|---|---|---|---|
| Vergleichsbeispiel 1 | --- | 98 | 0,33 µm | 13 Gew.-% | 8,1 |
| Vergleichsbeispiel 2 | nur Trocknung | 102 | 0,30 µm | 13 Gew.-% | 8,5 |
| Beispiel 1 | 400°C, 2 h | 101 | 0,32 µm | 4 Gew.-% | 8,8 |
| Beispiel 2 | 800°C, 1 h | 103 | 0,31 µm | 3 Gew.-% | 8,7 |
| Beispiel 3 | 800°C, 4 h | 101 | 0,32 µm | 2 Gew.-% | 8,8 |

Die Testergebnisse (Tabelle) zeigen, dass durch die Trocknung und mit zunehmender Temperatur bzw. Dauer der Wärmebehandlung die Säurelöslichkeit des erfindungsgemäß behandelten Pigments deutlich abnimmt. Parallel verschiebt sich der isoelektrische Punkt (IEP) zu höheren pH-Werten, wodurch die Dispergierbarkeit der Partikel verbessert wird. Gleichzeitig bewirkt die Wärmebehandlung eine Verbesserung des Aufhellvermögens (TS) unter Erhalt der mittleren Partikelgröße.

Es wird vermutet, dass durch die Wärmebehandlung die Hydroxylgruppen auf der Oberfläche der dichten SiO₂-Hülle nach folgender Gleichung weitgehend entfernt werden.

=Si-OH + HO-Si= → ≡Si-O-Si≡ + H₂O

Durch das Verdampfen des Wassers bei der Wärmebehandlung wird die Kondensation der Oberflächen-Silanolgruppen (=Si-OH) vervollständigt und die SiO₂-Hülle verdichtet. Die Säurelöslichkeit sinkt. Durch die Verdichtung der SiO₂-Hülle vor der abschließenden Aluminium-Fällung wird verhindert, dass sich eine Mischschicht von SiO₂ und Al₂O₃ bildet. Stattdessen werden die mit SiO₂ umhüllten Partikel von einer dichten, weitgehend geschlossenen Al₂O₂-Schicht umhüllt. Durch die Ausbildung der geschlossenen Al₂O₃-Schicht verschiebt sieb der isoelektrische Punkt zu höheren pH-Werten und führt damit zu einer verbesserten Dispergierbarkeit.

Die rasterelektronenmikroskopischen Untersuchungen mit dem EDX-Linienscan zeigen deutlich, dass die herkömmliche Verfahrensweise zu einer äußeren SiO₂-Al₂O₃-Mischschicht führt (Fig. 1: Vergleichsbeispiel), während die erfindungsgemäße Verfahrensweise zu einer weitgehend reinen äußeren Al₂O₃-Schicht führt (Fig. 2: Beispiel 4).

### Testmethoden

### Aufhellvermögen (TS)

Das Aufhellvermögen wurde mit dem MAB-Test gemessen. Dabei wird das zu untersuchende Pigment auf einer Farbenausreibmaschine (Automatic Muller) in eine

## Patentansprüche

1. Verfahren zur Oberflächenbeschichtung von anorganischen Partikeln in einer wässrigen Suspension mit einer separaten, dichten Siliciumdioxidschicht und mindestens einer weiteren anorganischen Verbindung umfassend die Schritte:
Aufbringen der Siliciumdioxidschicht,
Abtrennen der Partikel aus der Suspension,
Waschen, Trocknen und Wärmebehandeln der Partikel,
erneutes Anteigen der Partikel zu einer wässrigen Suspension und Beschichten mit mindestens einer weiteren anorganischen Verbindung, **dadurch gekennzeichnet, dass**
das Trocknen bei einer Temperatur von mehr als 100 °C erfolgt und
das Wärmebehandeln bei einer Temperatur von 200 °C bis 850 °C erfolgt.

2. Verfahren nach Anspruch 1 **dadurch gekennzeichnet, dass**
die anorganischen Partikel Pigmentpartikel sind.

3. Verfahren nach einem oder mehreren der Ansprüche 1 bis 2 **dadurch**
**gekennzeichnet, dass**
die anorganischen Partikel Titandioxidpigment-Partikel sind.

4. Verfahren nach einem oder mehreren der Ansprüche 1 bis 3 **dadurch**
**gekennzeichnet, dass**
die mindestens eine weitere anorganische Verbindung Aluminium, Elemente aus der 2. Hauptgruppe oder den Nebengruppen einzeln oder Kombinationen davon enthält.

5. Verfahren nach Anspruch 4 **dadurch gekennzeichnet, dass**
die mindestens eine weitere anorganische Verbindung Elemente aus der Gruppe der Lanthaniden enthält.

6. Verfahren nach einem oder mehreren der Ansprüche 1 bis 5 **dadurch**
**gekennzeichnet, dass**
die mindestens eine weitere anorganische Verbindung ausgewählt ist aus der Gruppe der Oxide, Hydroxide, Carbonate, Phosphate und Sulfide oder Kombinationen davon.

7. Verfahren nach einem oder mehreren der Ansprüche 1 bis 6 **dadurch**
**gekennzeichnet, dass**
die mindestens eine weitere anorganische Verbindung Aluminiumoxid ist.

8. Verfahren nach einem oder mehreren der Ansprüche 1 bis 7 **dadurch**
**gekennzeichnet, dass**
die Wärmebehandlung in einem Sprühtrockner, Etagentrockner, Vibrations-Wirbelschichttrockner, Muffelofen oder Drehrohrofen stattfindet.

## Claims

1. Method for coating the surface of inorganic particles in an aqueous suspension with a separate, dense layer of silicon dioxide and at least one further inorganic compound, comprising the steps of:
applying a silicon dioxide layer;
separating the particles from the suspension,
washing, drying, and heat treating the particles,
subsequently creating a second aqueous suspension of the particles and coating the particles with at least one further inorganic compound layer,
**characterized in, that**
drying is carried out at a temperature of more than 100 °C and
heat treating is carried out at a temperature of from 200 °C to 850 °C.

2. Method according to claim 1, **characterized in, that** the inorganic particles are pigment particles.

3. Method according to claim 1 or 2, **characterized in, that** the inorganic particles are titanium dioxide pigment particles.

4. Method according to one of the claims 1 to 3, **characterized in, that** the at least one further inorganic compound comprises aluminum, an alkali earth metal or an element of the sub group or a combination thereof.

5. Method according to claim 4, **characterized in, that** the at least one further inorganic compound is a compound of an element selected from the lanthanide series.

6. Method according to one of the claims 1 to 5, **characterized in, that** the at least one further inorganic compound is selected from the group consisting of oxides, hydroxides, carbonates, phosphates, sulfides, and combinations thereof.

7. Method according to one of the claims 1 to 6, **characterized in, that** the at least one further inorganic compound is aluminum oxide.

8. Method according to one of the claims 1 to 7, **characterized in, that** the heat treatment is carried out in a spray drier, plate drier, vibrating fluidized-bed drier, muffle furnace or rotary kiln.

## Revendications

1. Procédé de revêtement de surface de particules inorganiques dans une suspension aqueuse avec une couche de dioxyde de silicium dense séparée et au moins un autre composé inorganique, comprenant les étapes :
d'application de la couche de dioxyde de silicium,
de séparation des particules de la suspension,
de lavage, séchage et traitement thermique des particules,
de nouvelle préparation des particules en une suspension aqueuse et de revêtement avec au moins un autre composé inorganique, **caractérisé en ce que** le séchage est effectué à une température supérieure à 100 °C et
le traitement thermique est effectué à une température de 200 °C à 850 °C.

2. Procédé selon la revendication 1, **caractérisé en ce que**
les particules inorganiques sont des particules de pigment.

3. Procédé selon l'une quelconque des revendications 1 à 2, **caractérisé en ce que**
les particules inorganiques sont des particules de pigment de dioxyde de titane.

4. Procédé selon l'une quelconque ou plusieurs des revendications 1 à 3,
**caractérisé en ce que**
l'au moins un autre composé inorganique contient de l'aluminium, des éléments issus du 2^{e} groupe principal ou des groupes secondaires individuellement ou des combinaisons de ceux-ci.

5. Procédé selon la revendication 4, **caractérisé en ce que**
l'au moins un autre composé inorganique contient des éléments issus du groupe des lanthanides.

6. Procédé selon l'une quelconque ou plusieurs des revendications 1 à 5,
**caractérisé en ce que**
l'au moins un autre composé inorganique est choisi parmi le groupe des oxydes, des hydroxydes, des carbonates, des phosphates et des sulfures ou des combinaisons de ceux-ci.

7. Procédé selon l'une quelconque ou plusieurs des revendications 1 à 6,
**caractérisé en ce que**
l'au moins un autre composé inorganique est de l'oxyde d'aluminium.

8. Procédé selon l'une quelconque ou plusieurs des revendications 1 à 7,
**caractérisé en ce que**
le traitement thermique a lieu dans un séchoir par pulvérisation, un séchoir à étages, un séchoir à lit fluidisé par vibrations, un four à moufle ou un four rotatif.
